# EUROPÄISCHE PATENTSCHRIFT

(11) **EP 4 591 509 B1**
(45) Veröffentlichungstag und Bekanntmachung des Hinweises auf die Patenterteilung: **30.09.2026**
(21) Anmeldenummer: 23754795.5
(22) Anmeldetag: 10.08.2023
(51) Int. Cl.: H04L 9/40, H04W 12/06

(54) **VERFAHREN ZUM SICHEREN BEDIENEN ZUMINDEST EINES FELDGERÄTES DER AUTOMATISIERUNGSTECHNIK**
METHOD FOR SAFELY OPERATING AT LEAST ONE AUTOMATION TECHNOLOGY FIELD DEVICE
PROCÉDÉ POUR FAIRE FONCTIONNER EN TOUTE SÉCURITÉ AU MOINS UN DISPOSITIF AVEC TERRAIN DE TECHNOLOGIE D'AUTOMATISATION

(30) Priorität: 21.09.2022 DE 102022124254
(43) Veröffentlichungstag der Anmeldung: 30.07.2025
(73) Patentinhaber: Endress+Hauser SE+Co. KG, 79689 Maulburg (DE)
(72) Erfinder: SCHÄUBLE, Harald, 79541 Lörrach (DE); BOCKSTALLER, Julian, 79650 Schopfheim (DE); GEIB, Patrick, 79713 Bad Säckingen (DE); PAUL, Tobias, 79650 Schopfheim (DE)
(74) Vertreter: Endress + Hauser Group Services (Deutschland) AG+Co. KG
(86) Internationale Anmeldenummer: PCT/EP2023/072194
(87) Internationale Veröffentlichungsnummer: WO 2024/061532

(56) Entgegenhaltungen:
- EP-A1- 3 484 121
- DE-A1- 102014 105 076
- US-A1- 2004 203 600
- US-A1- 2016 381 557

## Beschreibung

Die Erfindung bezieht sich auf ein Verfahren zum sicheren Bedienen zumindest eines Feldgerätes der Automatisierungstechnik in einer Automatisierungsanlage über ein mobiles Endgerät.

In der Prozess- und Fabrikautomatisierungstechnik werden vielfach Feldgeräte eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperatur-messgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

Um eine drahtlose Datenübertragung zwischen einem solchen Feldgerät und einem mobilen Endgerät zu ermöglichen, weisen heutige Feldgeräte diverse Funkschnittstellen, wie bspw. WLAN, Bluetooth, und/oder Nahfeldkommunikation bzw. NFC, auf. Mittels dieser Schnittstellen lässt sich eine Verbindung zu dem entsprechenden Feldgerät herstellen, umso einen Zugriff auf dessen Mess- bzw. Stellwerte und/oder Daten, z.B. Parameter, zu ermöglichen. Für die Datenübertragung werden typischerweise mobile Endgeräte, verwendet, die ebenfalls diverse Funkschnittstellen aufweisen. Derartige mobile Endgeräte können bspw. Smartphones, Tablets, oder Notebooks sein.

Aus Sicherheitstechnischen Gründen ist es heutzutage üblich, dass sich ein Bediener, der an einem Feldgerät mittels eines mobilen Endgerätes, eine Bedienung, z.B. eine Konfiguration und/oder Parametrierung, vornehmen möchte, über ein Kennwort und/oder Passwort authentifizieren muss. Im Gegensatz dazu, muss ein Bediener, der sich vor Ort an dem Feldgerät befindet, zumindest um Zugriff auf Teile der Daten und/oder Mess- bzw. Stellwerte zu haben, keine Authentifizierung durchführen. Dies ist dem Umstand geschuldet, dass davon ausgegangen wird, dass ein Bediener, der Zugang zu der Anlage hat, auch berechtigt ist, Zugang zu den Daten und/oder Mess- bzw. Stellwerte des Feldgeräts zu haben.

Da nicht immer alle Feldgeräte, die sich in einer Anlage befinden, leicht zugänglich sind, bleibt in diesem Fall nur die Bedienung mit Hilfe des mobilen Endgerätes. Hierbei muss sich der Bediener allerdings bei jedem einzelnen zu bedienenden Feldgerät mit einem Benutzername und/oder einem Kennwort authentifizieren, bevor er Zugriff auf die Daten und/oder Mess- bzw. Stellwerte des jeweiligen Gerätes hat.

Der Erfindung liegt die Aufgabe zugrunde, hier Abhilfe zu schaffen.

Die Aufgabe wird erfindungsgemäß gelöst durch das Verfahren gemäß Patentanspruch 1.

Das erfindungsgemäße Verfahren zum sicheren Bedienen zumindest eines Feldgerätes der Automatisierungstechnik in einer Automatisierungsanlage über ein mobiles Endgerät, sieht vor, dass in dem Fall, dass eine mittels einer UWB-Verbindung ermittelte erste Entfernung zwischen dem Feldgerät und dem mobilen Endgerät größer gleich einer ersten vorgebbaren Entfernung ist bzw. wird, ein Verbindungsaufbau zwischen dem Feldgerät und dem mobilen Endgerät mittels einer Bluetoothverbindung und eine Authentifizierung an dem Feldgerät über die Bluetoothverbindung mittels Eingabe eines Benutzernamens und/oder eines Kennwortes an dem mobilen Endgerät durch einen Bediener durchgeführt wird, so dass bei einer erfolgreichen Authentifizierung der Bediener über die Bluetoothverbindung auf zumindest einen Teil der Daten und/oder Mess- bzw. Stellwerte des Feldgerätes zugreifen kann, und wobei das Verfahren zum sicheren Bedienen ferner vorsieht, dass in dem Fall, dass die mittels der UWB-Verbindung ermittelte erste Entfernung zwischen dem Feldgerät und dem mobilen Endgerät kleiner der ersten vorgebbaren Entfernung ist bzw. wird, ein Verbindungsaufbau zwischen dem Feldgerät und dem mobilen Endgerät mittels der UWB-Verbindung und/oder der Bluetoothverbindung derartig durchgeführt wird, dass eine Authentifizierung an dem Feldgerät ohne Eingabe eines Benutzernamens und/oder eines Kennworts über die UWB-Verbindung erfolgt, so dass bei einer erfolgreichen Authentifizierung der Bediener über die UWB-Verbindung oder die Bluetoothverbindung auf zumindest einen Teil der Daten und/oder Mess- bzw. Stellwerte des Feldgerätes zugreifen kann.

Erfindungsgemäß wird ein Verfahren vorgeschlagen, bei dem ein Bediener ein Feldgerät mittels eines mobilen Endgerätes bedienen kann, ohne dass er sich über die Eingabe eines Benutzernamens und/oder Kennwortes authentifizieren muss, sobald er sich in einer vorgebbaren Entfernung zu dem Feldgerät befindet. Die Entfernung wird hierbei erfindungsgemäß mittels einer UWB-Verbindung und somit über das Time-of-Fly (ToF) Verfahren ermittelt. Sobald die Entfernung sich innerhalb einer ersten vorgebbaren Entfernung befindet, kann eine Authentifizierung an dem Feldgerät ohne Eingabe eines Benutzernamens und/oder eines Kennworts über die UWB-Verbindung erfolgen. Im Ergebnis stellt sich die Bedienung des Feldgerätes durch den Bediener dann so da, als wäre er direkt vor Ort und würde das Feldgerät über das integrierte Display bedienen.

Eine vorteilhafte Ausführungsform des erfindungsgemäßen Verfahrens sieht vor, dass in Abhängigkeit von weiteren vorgebbaren Entfernungen zwischen dem Feldgerät und dem mobilen Endgerät, die jeweils kleiner als die erste Entfernung sind, die Zugriffsrechte auf die Daten und/oder Mess- bzw. Stellwerte geregelt werden.

Eine vorteilhafte Ausführungsform des erfindungsgemäßen Verfahrens sieht vor, dass in dem Fall, dass nach einer erfolgreichen Authentifizierung über die UBW-Verbindung die erste Entfernung zwischen dem Feldgerät und dem mobilen Endgerät größer der ersten vorgebbaren Entfernung ist bzw. wird, der Zugriff auf Daten und/oder Mess- bzw. Stellwerte des Feldgeräts durch das mobile Endgerät unterbunden wird.

Eine alternative Ausführungsform des erfindungsgemäßen Verfahrens sieht vor, dass in dem Fall, dass nach einer erfolgreichen Authentifizierung über die UBW-Verbindung die erste Entfernung zwischen dem Feldgerät und dem mobilen Endgerät größer der ersten vorgebbaren Entfernung ist bzw. wird, der Zugriff auf Daten und/oder Mess- bzw. Stellwerte des Feldgeräts durch das mobile Endgerät so lange aufrechterhalten wird, bis die Bluetoothverbindung und/oder UWB-Verbindung unterbrochen wird.

Eine vorteilhafte Ausführungsform des erfindungsgemäßen Verfahrens sieht vor, dass die erste vorgebbare und/oder die weiteren vorgebbaren Entfernungen durch einen Anlagenbetreiber der Automatisierungsanlage vorgebbar sind.

Eine vorteilhafte Ausführungsform des erfindungsgemäßen Verfahrens sieht vor, dass dem Bediener durch das mobile Endgerät sämtliche Feldgeräte angezeigt werden, die sich innerhalb der ersten Entfernung zu dem mobilen Endgerät befinden.

Eine vorteilhafte Ausführungsform des erfindungsgemäßen Verfahrens sieht vor, dass das Anzeigen der Feldgeräte durch das mobile Endgerät auch die Angabe über die Entfernung zu dem jeweiligen Feldgerät umfasst.

Eine vorteilhafte Ausführungsform des erfindungsgemäßen Verfahrens sieht vor, dass im Falle einer erfolgreichen Authentifizierung über die UWB-Verbindung eine Navigation zu dem Feldgerät auf dem mobilen Endgerät ermöglicht wird.

Die Erfindung wird anhand der nachfolgenden Zeichnung näher erläutert. Es zeigt:

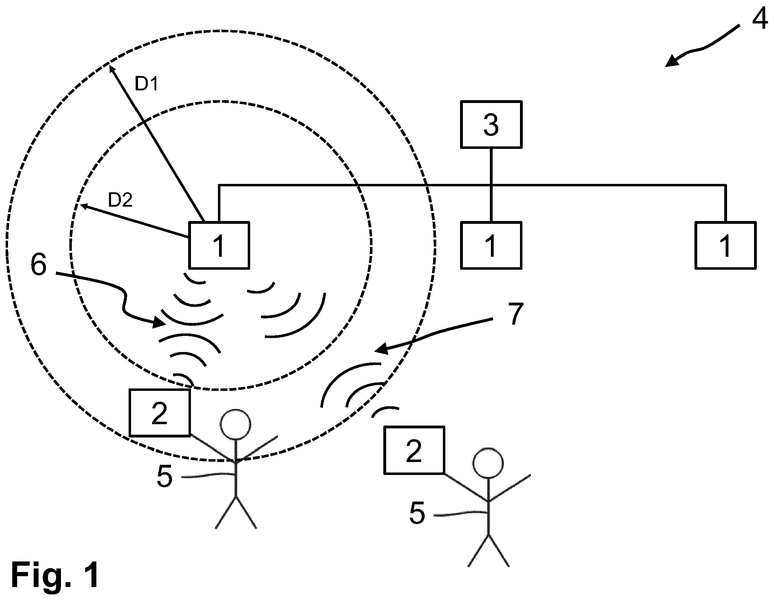

Fig. 1: schematische eine Automatisierungsanlage mit exemplarisch drei Feldgeräten der Automatisierungstechnik, um das erfindungsgemäße Verfahren zu verdeutlichen.

Figur 1 zeigt schematisch und stark vereinfacht eine Automatisierungsanlage 4 mit exemplarisch drei Feldgeräten 1, die mit einer übergeordneten Einheit 3 datenleitend verbunden sein können.

Um eine drahtlose Datenübertragung zwischen einem solchen Feldgerät 1 und einem mobilen Endgerät 2 zu ermöglichen, weist sowohl das Feldgerät 1 als auch das mobile Endgerät 2 eine Bluetoothschnittstelle und eine UWB-Schnittstelle zur drahtlosen Datenübertragung auf. Bei dem mobilen Endgerät 2 kann es sich dabei, wie eingangs erwähnt, um ein Smartphone, ein Tablet, oder auch ein Notebook handeln. Daneben können als mobile Endgeräte auch mobile Bediengeräte zum Einsatz kommen, die in der Automatisierungstechnik üblicherweise bereits heute zum Bedienen der Feldgeräte eingesetzt werden.

Das erfindungsgemäße Verfahren sieht vor, dass ein Verbindungsaufbau zwischen dem Feldgerät 1 und dem mobilen Endgerät 2 mittels einer Bluetoothverbindung 7 erfolgt, in dem Fall, dass eine erste Entfernung D1 zwischen dem Feldgerät 1 und dem mobilen Endgerät 2 größer gleich einer ersten vorgebbaren Entfernung ist bzw. wird. Die erste Entfernung wird hierbei über eine UWB-Verbindung und somit über das Time-of-Fly (ToF) Verfahren ermittelt. Die erste vorgebbare Entfernung kann bspw. durch den Anlagenbetreiber der Automatisierungsanlage festgelegt bzw. vorgegeben werden. Beispielhaft sei hier an eine erste Entfernung D1 gedacht, die im Bereich bis ca. 7m, vorzugsweise im Bereich bis ca. 6m, besonders bevorzugt im Bereich bis ca. 5m liegt.

Der eigentliche Verbindungsaufbau kann durch den Bediener 5, der sich in der Automatisierungsanlage 4 und in Funkreichweite zu dem Feldgerät 1 aber nicht unmittelbar am Ort des Feldgerätes 1 befindet, mittels des mobilen Endgerätes 2 initiiert werden. Hierzu können dem Bediener 5 beispielsweise sämtliche Feldgeräte, die in Funkreichweite sind, angezeigt werden. Dies kann z.B. in Form einer Life-List erfolgen, so dass der Bediener 5 auswählen kann, mit welchem Feldgerät 1 eine Verbindung aufgebaut werden soll. Ergänzend kann dem Bediener 5 auch eine Angabe über die Entfernung des jeweiligen Feldgerätes 1 zu dem mobilen Endgerät 2 gemacht werden, z.B. in dem auf dem Display des mobilen Endgerätes die Entfernung dargestellt wird. Es versteht sich von selbst, dass der Verbindungsaufbau durch die Entfernung des Feldgerätes 1 zu dem mobilen Endgerät 2 in Abhängigkeit der Funkreichweite der Bluetoothverbindung limitiert ist.

Anschließend sieht das Verfahren eine Authentifizierung an dem Feldgerät über die Bluetoothverbindung mittels Eingabe eines Benutzernamens und/oder eines Kennwortes durch den Bediener an dem mobilen Endgerät vor, so dass bei einer erfolgreichen Authentifizierung der Bediener über die Bluetoothverbindung auf Daten und/oder Mess- bzw. Stellwerte des Feldgerätes zugreifen kann.

Das Verfahren sieht ferner vor, dass in dem Fall, dass die erste Entfernung zwischen dem Feldgerät 1 und dem mobilen Endgerät 2 kleiner einer ersten vorgebbaren Entfernung D1 ist bzw. wird, ein Verbindungsaufbau zwischen dem Feldgerät 1 und dem mobilen Endgerät 2 mittels einer UWB-Verbindung 6 durchgeführt wird. Anschließend wird eine Authentifizierung an dem Feldgerät 1 ohne Eingabe eines Benutzernamens und/oder eines Kennworts über die UWB-Verbindung 6 durchgeführt, so dass bei einer erfolgreichen Authentifizierung der Bediener 5 über die UWB-Verbindung 6 oder die Bluetoothverbindung 7 auf Daten und/oder Mess- bzw. Stellwerte des Feldgerätes 1 zugreifen kann. In einer bevorzugten Variante des Verfahrens werden nach einer erfolgreichen Authentifizierung über die UWB-Verbindung die Daten und/oder Mess- bzw. Stellwerte nur über die Bluetoothverbindung 7 übertragen und nicht über die UWB-Verbindung 6.

Ergänzend kann das Verfahren vorsehen, dass in dem Fall, dass nach einer erfolgreichen Authentifizierung über die UBW-Verbindung 6 die erste Entfernung zwischen dem Feldgerät 1 und dem mobilen Endgerät 2 größer der ersten vorgebbaren Entfernung D1 ist bzw. wird, der Zugriff auf Daten und/oder Mess- bzw. Stellwerte des Feldgeräts 1 durch das mobile Endgerät 2 unterbunden wird. Dies bedeutet, es können keine Daten und/oder Mess- bzw. Stellwerte mehr ausgetauscht werden. Alternativ hierzu kann das Verfahren vorsehen, dass in dem Fall, dass nach einer erfolgreichen Authentifizierung über die UBW-Verbindung 6 die erste Entfernung zwischen dem Feldgerät 1 und dem mobilen Endgerät 2 größer der ersten vorgebbaren Entfernung D1 ist bzw. wird, der Zugriff auf Daten und/oder Mess- bzw. Stellwerte des Feldgeräts durch das mobile Endgerät so lange aufrechterhalten wird, bis die Bluetoothverbindung 7 und/oder UWB-Verbindung 6 unterbrochen wird. Die Unterbrechung der Bluetoothverbindung 7 und/oder der UWB-Verbindung 6 kann hierbei durch den Bediener 5 erfolgen, der die Verbindung bewusst durch entsprechende Maßnahmen am mobilen Endgerät, z.B. Trennen der Verbindung, initiiert. Alternativ kann die Unterbrechung der Verbindung aber auch automatisch erfolgen, z.B. in dem Fall, dass sich das mobile Endgerät 2 außerhalb des maximalen Funkbereichs von dem Feldgerät 1 bewegt hat.

Ergänzend kann das Verfahren vorsehen, dass in Abhängigkeit von weiteren vorgebbaren Entfernungen D2 zwischen dem Feldgerät 1 und dem mobilen Endgerät 2, die jeweils kleiner als die erste Entfernung sind, die Zugriffsrechte auf die Daten und/oder Mess- bzw. Stellwerte geregelt werden. So können beispielsweise mehr Zugriffsrechte gestattet werden, je näher sich das mobile Endgerät 2 an dem Feldgerät 1 befindet. Die weiteren vorgebbaren Entfernungen können ebenfalls durch den Anlagenbetreiber der Automatisierungsanlage festgelegt werden bzw. vorgebbar sein.

Das Verfahren kann ferner ergänzend vorsehen, dass im Falle einer erfolgreichen Authentifizierung über die UWB-Verbindung 6, dem Bediener 5 eine Navigation zu dem Feldgerät 1 auf dem mobilen Endgerät 2 ermöglicht wird.

### Bezugszeichenliste

- 1: Feldgerät der Automatisierungstechnik
- 2: Mobiles Endgerät
- 3: Übergeordnete Einheit, z.B. SPS
- 4: Automatisierungsanlage
- 5: Bediener
- 6: UWB-Verbindung
- 7: Bluetoothverbindung
- D1: Erste vorgebbare Entfernung
- D2: Weitere vorgebbare Entfernung

## Patentansprüche

1. Verfahren zum sicheren Bedienen zumindest eines Feldgerätes der Automatisierungstechnik (1) in einer Automatisierungsanlage (4) über ein mobiles Endgerät (2), wobei das Verfahren zum sicheren Bedienen vorsieht, dass in dem Fall, dass eine mittels einer UWB-Verbindung ermittelte erste Entfernung (D1), zwischen dem Feldgerät (1) und dem mobilen Endgerät (2) größer gleich einer ersten vorgebbaren Entfernung (D1) ist bzw. wird, ein Verbindungsaufbau zwischen dem Feldgerät (1) und dem mobilen Endgerät (2) mittels einer Bluetoothverbindung und eine Authentifizierung an dem Feldgerät (1) über die Bluetoothverbindung (7) mittels Eingabe eines Benutzernamens und/oder eines Kennwortes an dem mobilen Endgerät (2) durch einen Bediener durchgeführt wird, so dass bei einer erfolgreichen Authentifizierung der Bediener (5) über die Bluetoothverbindung (7) auf zumindest einen Teil der Daten und/oder Mess- bzw. Stellwerte des Feldgerätes (1) zugreifen kann, und wobei das Verfahren zum sicheren Bedienen ferner vorsieht, dass in dem Fall, dass die mittels der UWB-Verbindung ermittelte erste Entfernung zwischen dem Feldgerät (1) und dem mobilen Endgerät (2) kleiner der ersten vorgebbaren Entfernung (D1) ist bzw. wird, ein Verbindungsaufbau zwischen dem Feldgerät (1) und dem mobilen Endgerät (2) mittels der UWB-Verbindung und/oder der Bluetoothverbindung derartig durchgeführt wird, dass eine Authentifizierung an dem Feldgerät (1) ohne Eingabe eines Benutzernamens und/oder eines Kennworts über die UWB-Verbindung (6) erfolgt, so dass bei einer erfolgreichen Authentifizierung der Bediener (5) über die UWB-Verbindung (6) oder die Bluetoothverbindung (7) auf zumindest einen Teil der Daten und/oder Mess- bzw. Stellwerte des Feldgerätes (1) zugreifen kann.

2. Verfahren nach Anspruch 1, wobei in Abhängigkeit von weiteren vorgebbaren Entfernungen (D2) zwischen dem Feldgerät (1) und dem mobilen Endgerät (2), die jeweils kleiner als die erste Entfernung (D1) sind, die Zugriffsrechte auf die Daten und/oder Mess- bzw. Stellwerte geregelt werden.

3. Verfahren nach einem oder mehreren der vorhergehenden Ansprüche, wobei in dem Fall, dass nach einer erfolgreichen Authentifizierung über die UWB-Verbindung (6) die erste Entfernung (D1) zwischen dem Feldgerät (1) und dem mobilen Endgerät (2) größer der ersten vorgebbaren Entfernung (D1) ist bzw. wird, der Zugriff auf Daten und/oder Mess- bzw. Stellwerte des Feldgeräts (1) durch das mobile Endgerät (2) unterbunden wird.

4. Verfahren nach Anspruch 1 oder 2, wobei in dem Fall, dass nach einer erfolgreichen Authentifizierung über die UWB-Verbindung (6) die erste Entfernung (D1) zwischen dem Feldgerät (1) und dem mobilen Endgerät (2) größer der ersten vorgebbaren Entfernung ist bzw. wird, der Zugriff auf Daten und/oder Mess- bzw. Stellwerte des Feldgeräts durch das mobile Endgerät (2) so lange aufrechterhalten wird, bis die Bluetoothverbindung (7) und/oder UWB-Verbindung (6) unterbrochen wird.

5. Verfahren nach einem oder mehreren der vorhergehenden Ansprüche, wobei die erste vorgebbare und/oder die weiteren vorgebbaren Entfernungen durch einen Anlagenbetreiber der Automatisierungsanlage (4) vorgebbar sind.

6. Verfahren nach einem oder mehreren der vorhergehenden Ansprüche, wobei dem Bediener durch das mobile Endgerät (2) sämtliche Feldgeräte (1) angezeigt werden, die sich innerhalb der ersten Entfernung zu dem mobilen Endgerät (2) befinden.

7. Verfahren nach dem vorhergehenden Anspruch, wobei das Anzeigen der Feldgeräte durch das mobile Endgerät (2) auch die Angabe über die Entfernung zu dem jeweiligen Feldgerät (1) umfasst.

8. Verfahren nach einem oder mehreren der vorhergehenden Ansprüche, wobei im Falle einer erfolgreichen Authentifizierung über die UWB-Verbindung eine Navigation zu dem Feldgerät (1) auf dem mobilen Endgerät (2) ermöglicht wird.

## Claims

1. A method for the safe operation of at least one automation technology field device (1) in an automation system (4) using a mobile device (2), wherein the method for safe operation involves, in the event that a first distance (D1) determined using a UWB connection between the field device (1) and the mobile device (2) is or becomes greater than or equal to a first specifiable distance (D1), a connection is set up between the field device (1) and the mobile device (2) by means of a Bluetooth connection and authentication is performed at the field device (1) via the Bluetooth connection (7) by an operator entering a username and/or a password on the mobile device (2) so that, when the operator (5) is successfully authenticated via the Bluetooth connection (7), they can access at least some of the data and/or measured or control values of the field device (1), and wherein the method for safe operation further involves, in the event that the first distance determined using the UWB connection between the field device (1) and the mobile device (2) is or becomes smaller than the first specifiable distance (D1), a connection is set up between the field device (1) and the mobile device (2) by means of the UWB connection and/or the Bluetooth connection in such a way that authentication takes place at the field device (1) via the UWB connection (6) without entering a username and/or a password so that, when the operator (5) is successfully authenticated via the UWB connection (6) or the Bluetooth connection (7), they can access at least some of the data and/or measured or control values of the field device (1).

2. The method as claimed in claim 1, wherein the access rights to the data and/or measured or control values are managed depending on additional specifiable distances (D2) between the field device (1) and the mobile device (2), each of which is smaller than the first distance (D1).

3. The method as claimed in one or more of the preceding claims, wherein in the event that, after successful authentication via the UWB connection (6), the first distance (D1) between the field device (1) and the mobile device (2) is or becomes greater than the first specifiable distance (D1), access to the data and/or measured or control values of the field device (1) by the mobile device (2) is prevented.

4. The method as claimed in claim 1 or 2, wherein in the event that authentication via the UWB connection (6) is successful, the first distance (D1) between the field device (1) and the mobile device (2) is or becomes greater than the first specifiable distance, access to the data and/or measured or control values of the field device by the mobile device (2) is maintained until the Bluetooth connection (7) and/or UWB connection (6) is/are disconnected.

5. The method as claimed in one or more of the preceding claims, wherein the first specifiable and/or the additional specifiable distances can be specified by a system operator of the automation system (4).

6. The method as claimed in one or more of the preceding claims, wherein the mobile device (2) shows the operator all of the field devices (1) that are located within the first distance from the mobile device (2).

7. The method as claimed in the preceding claim, wherein the display of the field devices by the mobile device (2) also comprises information about their distance from the respective field device (1).

8. The method as claimed in one or more of the preceding claims, wherein in the event that authentication via the UWB connection is successful, it will be possible to navigate to the field device (1) on the mobile device (2).

## Revendications

1. Procédé destiné à la commande sécurisée d'au moins un appareil de terrain (1) issu de la technique d'automatisation dans une installation d'automatisation (4) via un terminal mobile (2), lequel procédé de commande sécurisée prévoit que, dans le cas où une première distance (D1) déterminée au moyen d'une connexion UWB entre l'appareil de terrain (1) et le terminal mobile (2) est ou devient supérieure ou égale à une première distance (D1) prédéfinissable, une connexion est établie entre l'appareil de terrain (1) et le terminal mobile (2) soit établie au moyen d'une connexion Bluetooth, et qu'une authentification sur l'appareil de terrain (1) soit effectuée via la connexion Bluetooth (7) par la saisie d'un nom d'utilisateur et/ou d'un mot de passe sur le terminal mobile (2) par un opérateur, de sorte qu'en cas d'authentification réussie, l'opérateur (5) puisse accéder, via la connexion Bluetooth (7), à au moins une partie des données et/ou des valeurs de mesure ou de réglage de l'appareil de terrain (1), lequel procédé de commande sécurisée prévoit en outre que, dans le cas où la première distance, déterminée au moyen de la connexion UWB, entre l'appareil de terrain (1) et le terminal mobile (2) est ou devient inférieure à la première distance (D1) prédéfinissable, une connexion soit établie entre l'appareil de terrain (1) et le terminal mobile (2) via la connexion UWB et/ou la connexion Bluetooth, de telle sorte qu'une authentification sur l'appareil de terrain (1) puisse avoir lieu sans saisie d'un nom d'utilisateur et/ou d'un mot de passe via la connexion UWB (6), de sorte qu'en cas d'authentification réussie, l'opérateur (5) puisse accéder, via la connexion UWB (6) ou la connexion Bluetooth (7), à au moins une partie des données et/ou des valeurs de mesure ou de réglage de l'appareil de terrain (1).

2. Procédé selon la revendication 1, pour lequel les droits d'accès aux données et/ou aux valeurs de mesure ou de réglage sont régulés en fonction d'autres distances (D2) prédéfinissables entre l'appareil de terrain (1) et le terminal mobile (2), lesquelles distances sont toutes inférieures à la première distance (D1).

3. Procédé selon l'une des revendications précédentes, pour lequel, dans le cas où, après une authentification réussie via la connexion UWB (6), la première distance (D1) entre l'appareil de terrain (1) et le terminal mobile (2) est ou devient supérieure à la première distance (D1) prédéfinissable, l'accès aux données et/ou aux valeurs de mesure ou de réglage de l'appareil de terrain (1) par le terminal mobile (2) est bloqué.

4. Procédé selon la revendication 1 ou 2, pour lequel, dans le cas où, après une authentification réussie via la connexion UWB (6), la première distance (D1) entre l'appareil de terrain (1) et le terminal mobile (2) est ou devient supérieure à la première distance prédéfinissable, l'accès aux données et/ou aux valeurs de mesure ou de réglage de l'appareil de terrain par le terminal mobile (2) est maintenu jusqu'à ce que la connexion Bluetooth (7) et/ou la connexion UWB (6) soit interrompue.

5. Procédé selon l'une ou plusieurs des revendications précédentes, pour lequel la première distance prédéfinissable et/ou les autres distances prédéfinissables peuvent être prédéfinies par un exploitant de l'installation d'automatisation (4).

6. Procédé selon l'une ou plusieurs des revendications précédentes, pour lequel le terminal mobile (2) affiche à l'opérateur tous les appareils de terrain (1) situés à l'intérieur de la première distance par rapport au terminal mobile (2).

7. Procédé selon la revendication précédente, pour lequel l'affichage des appareils de terrain par le terminal mobile (2) comprend également l'indication de la distance par rapport à l'appareil de terrain concerné (1).

8. Procédé selon l'une ou plusieurs des revendications précédentes, pour lequel, en cas d'authentification réussie via la connexion UWB, la navigation vers l'appareil de terrain (1) est rendue possible sur le terminal mobile (2).
